Europäisches Patentamt

European Patent Office

Office européen des brevets

(11) Veröffentlichungsnummer: **0 286 946 B1**

## (12) EUROPÄISCHE PATENTSCHRIFT

(45) Veröffentlichungstag der Patentschrift: **02.09.92**

(51) Int. Cl.⁵: **H02B 1/18**, H01H 85/32

(21) Anmeldenummer: **88105401.9**

(22) Anmeldetag: **05.04.88**

(54) **Sicherungsklemme, insbesondere für Kleintransformatoren.**

(30) Priorität: **16.04.87 DE 3713059**

(43) Veröffentlichungstag der Anmeldung:
**19.10.88 Patentblatt 88/42**

(45) Bekanntmachung des Hinweises auf die
Patenterteilung:
**02.09.92 Patentblatt 92/36**

(84) Benannte Vertragsstaaten:
**CH DE FR GB IT LI**

(56) Entgegenhaltungen:
**DE-A- 1 939 953**
**FR-A- 2 513 437**

(73) Patentinhaber: **SIEMENS AKTIENGESELL-
SCHAFT**
**Wittelsbacherplatz 2**
**W-8000 München 2(DE)**

(72) Erfinder: **Denk, Theo**
**Godinstrasse 27**
**W-8401 Pentling(DE)**
Erfinder: **Barth, Ulrich**
**Schillerstrasse 22**
**W-8407 Obertraubling(DE)**
Erfinder: **Bezold, Walter, Dipl.-Ing.**
**Sieglitzhoferstrasse 48**
**W-8520 Erlangen(DE)**

**Beschreibung**

Die Erfindung bezieht sich auf eine Sicherungsklemme, insbesondere zum Aufsetzen auf Tragschienen, besonders an Kleintransformatoren, die zwischen Zugangs- und Abgangsanschlüssen elektrisch leitende Verbindungen aufweist, wobei in eine Verbindung eine Sicherung zwischen einem Fußkontakt und einem Kopfkontakt eingeschaltet ist, wobei die leitenden Verbindungen zum Fußkontakt und zum Kopfkontakt der Sicherung in einer Gehäusekammer zusammengeführt und mit einem Signalgeber verbindbar sind.

Eine derartige Sicherungsklemme, allgemein für Schaltanlagen, ist bekannt (DE-A-1 939 953). Hierbei kann eine Signalvorrichtung mit Vorwiderstand neben einer Aufnahme für einen Sicherungseinsatz eingesetzt werden. Verschiedenartige Beschaltungen lassen sich hiermit nicht herstellen.

Bei einer bekannten Sicherungsklemme (DE-U-8 426 648), die für Kleintransformatoren vorgesehen ist, kann in eine Bohrung eine Sicherung eingesetzt und durch eine Kappe verschlossen werden. Von Kopf- und Fußkontakt führen elektrische Verbindungen zu Anschlüsen. Jeweils ein weiterer Anschluß auf der Zugangs- und auf der Abgangsseite sind elektrisch durchverbunden. Die als Sicherungshalter bezeichnete Klemme kann hinter eine Tragschiene an einem Spulenkörper bzw. in eine Tasche mit einem Haltearm eingesteckt und eingerastet werden. Durch eine solche Sicherungsklemme können die Wicklungen von Kleintransformatoren gegen Überlastung geschützt werden.

In der Praxis ist es erwünscht, den Zustand der Sicherung an einem Anzeiger leicht erkennen zu können. Der Erfindung liegt die Aufgabe zugrunde, eine Sicherungsklemme der eingangs genannten Art so zu verbessern, daß an einem Signalgeber der Zustand der Sicherung in verschiedenen Schaltungen leicht erkannt werden kann.

Die Lösung der geschilderten Aufgabe besteht nach der Erfindung darin, daß die leitenden Verbindungen zum Fußkontakt und zum Kopfkontakt der Sicherung zusätzlich mit einer Durchverbindung in einer Gehäusekammer zusammengeführt sind und daß von den genannten drei elektrischen Verbindungen wahlweise jeweils zwei mittels eines umsetzbaren Verbindungskörpers mit dem Signalgeber verbindbar sind.

Dadurch ist es möglich, die Sicherungsklemme sowohl auf der Primärseite als auch auf der Sekundärseite eines Transformators anzubringen und außerdem verschiedene Schaltungen für den Signalgeber zum Anzeigen des Sicherungszustandes leicht zu verwirklichen.

Die Sicherungsklemme kann mit der Primärwicklung oder mit der Sekundärwicklung verbunden werden. Sie kann durch den Signalgeber die intakte Sicherung anzeigen. Man kann auch auf der Primärseite oder auf der Sekundärseite durch den Signalgeber die defekte Sicherung anzeigen. Dabei kann der Signalgeber an oder in der Sicherungsklemme angeordnet sein oder auch davon getrennt untergebracht werden, beispielsweise in einer Anzeigetafel.

Der Verbindungskörper kann in einer Kammer einsteckbar ausgeführt sein und durch Umsetzen um seine gedachte Steckachse mit elektrischen Verbindungsleitungen verschiedenartige Schaltverbindungen herstellen. Dabei kann das Klemmengehäuse eine seitlich offene Tasche für eine Tragschiene bilden und eine angelenkte Abdeckkappe aufweisen, die über Anschlüsse an der unteren Schmalseite des Klemmengehäuses zu schließen ist. Steckanschlüsse können in Kammern an der oberen Schmalseite des Klemmengehäuses vorgesehen sein und eine andere Kammer kann einen Sicherungseinsatz zwischen Kopf- und Fußkontakt aufnehmen, wie es an sich bekannt ist.

Die leitenden Verbindungen können bandförmig und vorteilhafterweise so abgewinkelt sein, daß sie in der Kammer für den Verbindungskörper nebeneinander zu liegen kommen. Wenn man Verbindungen zum Kopf- und zum Fußkontakt gegenüberliegend in einer Ebene angeordnet, der mit der elektrischen Durchgangsverbindung zwischen Zugangs- und Abgangsanschlüssen leitend verbunden ist, kann man beispielsweise durch einen quaderförmigen Verbindungskörper die verschiedenartigen Schaltverbindungen herstellen. Hierzu genügt es im Prinzip, exzentrisch zur gedachten Umsteckachse eine Kontaktstrecke vorzusehen.

Der Verbindungskörper kann einen Signalgeber aufnehmen oder zu einem externen Signalgeber Leitungsanschlüsse aufweisen. Dadurch kann direkt an der Sicherungsklemme oder an einer zentralen Anzeigetafel der Zustand der Sicherung überwacht werden. Der Signalgeber kann eine Leuchtdiode sein, eine Glimmlampe oder auch eine Glühlampe. Wenn zum Signalgeber ein Kaltleiterwiderstand in Reihe geschaltet wird, läßt sich spannungsmäßig der Einsatzbereich des Signalgebers vergrößern.

Die Kammern bzw. die Kanäle für die Verbindungskörper im Klemmengehäuse können in einfacher Weise dadurch hergestellt werden, daß das Klemmengehäuse einen Einsatz aus Isolierstoff aufnimmt, der Kammern für Steckanschlüsse und für den Verbindungskörper und Kanäle für bandförmige Verbindungen bildet. Dieser Einsatz kann für sich gefertigt werden und dann in ein leicht zu fertigendes Klemmengehäuse eingeführt und eingerastet werden.

Die Erfindung soll nun anhand von in der Zeichnung grob schematisch wiedergegebenen Ausführungsbeispielen näher erläutert werden:

In Fig. 1 ist ein Ausführungsbeispiel der Sicherungsklemme im Längsschnitt wiedergegeben.

In Fig. 2 ist die Ansicht eines weiteren Längsschnitts längs II-II nach Fig. 3 dargestellt.

In Fig. 3 ist ein Querschnitt durch die Sicherungsklemme längs III-III nach Fig. 2 veranschaulicht.

In Fig. 4 ist ein weiterer Querschnitt, längs IV-IV nach Fig. 2 wiedergegeben.

In Fig. 5 ist die Aufsicht auf die obere Schmalseite der Sicherungsklemme dargestellt.

In Fig. 6 ist die Aufsicht auf zusammengeführte bandförmige Verbindungsleiter veranschaulicht, die durch einen Verbindungskörper zu Schaltverbindungen verbunden werden können.

In Fig. 7 ist ein quaderförmiger Verbindungskörper zum Einsetzen in eine abgebrochen wieder-gegebene Gehäusekammer perspektivisch dar-gestellt.

In Fig. 8 sind abgewinkelte bandförmige Verbindungsleiter veranschaulicht, die in einer quadratischen Fläche zum Kontaktieren durch einen Verbindungskörper zusammengeführt sind.

In Fig. 9 ist der Kontaktbereich von bandförmigen Verbindungsleitern mit einer durch den Ver-bindungskörper bewirkten Schaltverbindung ver-anschaulicht.

In Fig. 10 ist die zu Fig. 9 zugeordnete Schaltverbindung wiedergegeben.

In Fig. 11 ist der Kontaktbereich entsprechend Fig. 9 für eine andere Schaltverbindung veranschaulicht.

In Fig. 12 ist die zu Fig. 11 zugeordnete Schaltverbindung dargestellt.

In Fig. 13 ist der Kontaktbereich nach Fig. 9 für eine weitere Schaltverbindung veranschaulicht.

In Fig. 14 ist die zu Fig. 13 zugeordnete Schaltverbindung wiedergegeben.

In Fig. 15 ist ein Kleintransformator mit aufge-steckter Sicherungsklemme perspektivisch ver-anschaulicht.

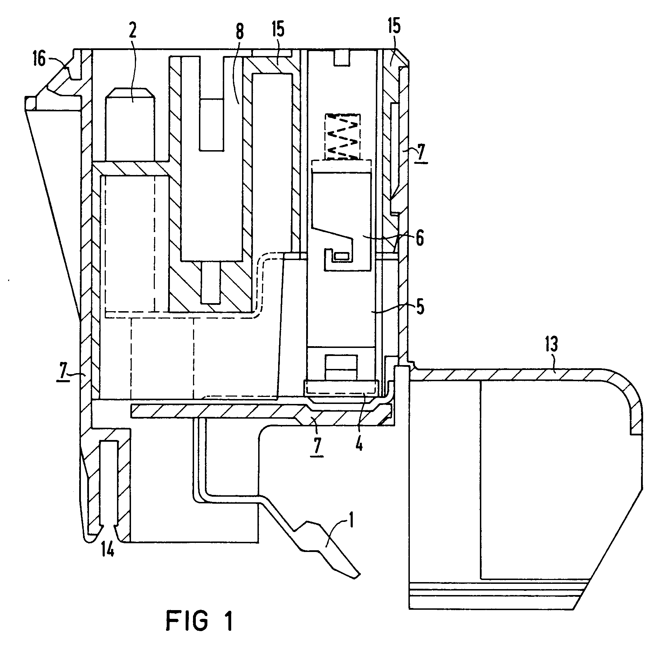

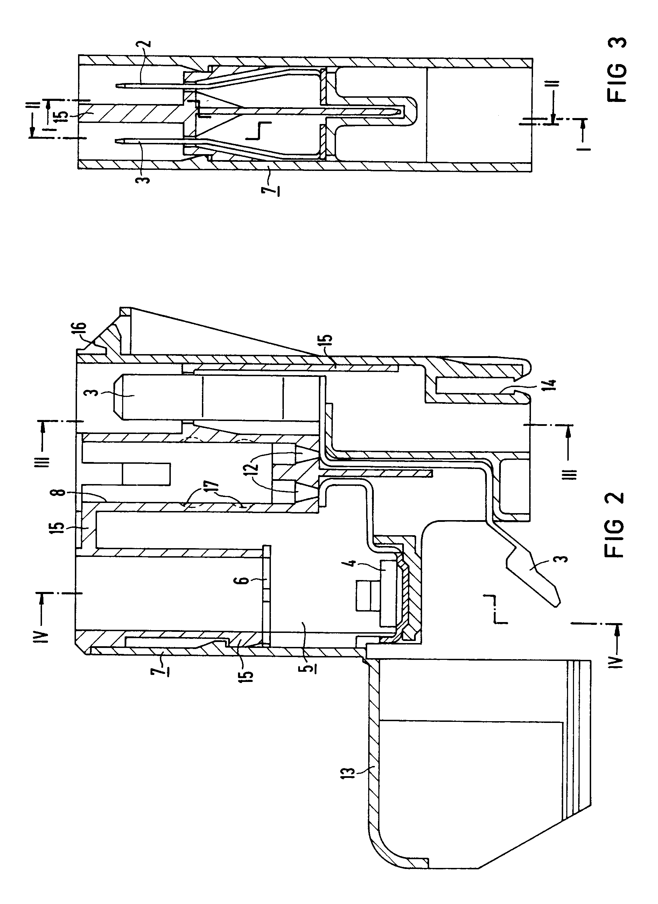

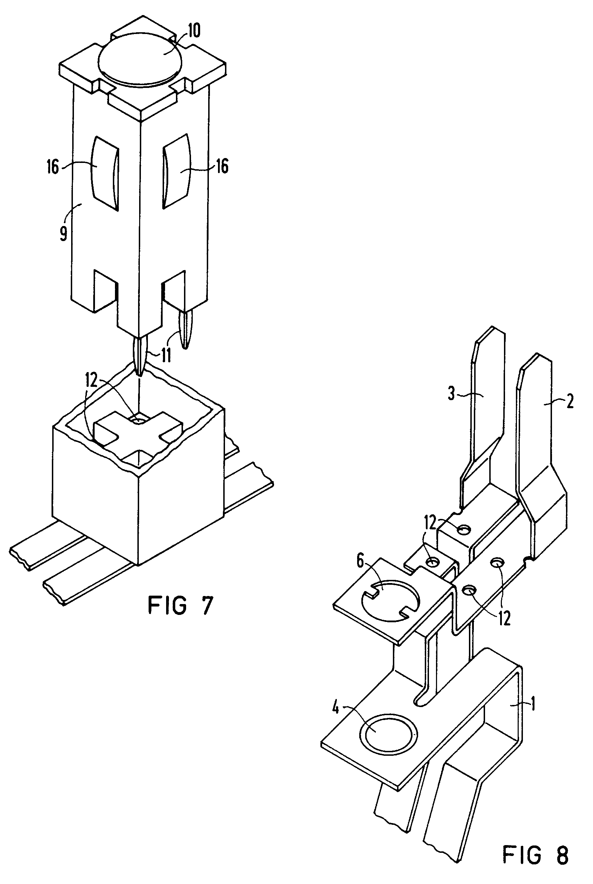

Die Sicherungsklemme nach Fig. 1 weist einen beispielhaft als Lötverbindung ausgebildeten ersten Anschluß 1, zum Fußkontakt 4, und einen im Ausführungsbeispiel als Zunge für einen Steckanschluß ausgeführten zweiten Anschluß 2, zum Kopfkontakt 6, eines Aufnahmeraums 5 für einen Sicherungseinsatz auf. In einer weiteren Ebene sind Anschlüsse 3 nach Fig. 2 für eine Durchverbindung angeordnet. Im Gehäuse 7 der Sicherungsklemme sind die leitenden Verbindungen zum Fußkontakt 4 und zum Kopfkontakt 6 einer Sicherung und einer Durchverbindung mit den Anschlüssen 3 in einer Gehäusekammer 8 zusammengeführt. Mittels eines umsetzbaren Verbindungskörpers 9 nach Fig. 7, der in die Gehäusekammer 8 eingeführt werden kann, lassen sich verschiedenartige Schaltverbindungen herstellen. Hierzu läßt sich der Verbindungskörper 9 um seine gedachte Längsachse umsetzen. Der Verbindungskörper 9 kann einen Signalgeber 10 aufnehmen. Steckkontakte 11 können in Steckbuchsen 12 nach Fig. 7 und nach Fig. 2 elektrischen Kontakt zwischen den leitenden Verbindungen zum Fußkontakt 4, zum Kopfkontakt 6 und zur Durchverbindung zwischen den Anschlüssen 3 wahlweise herstellen.

Das Gehäuse 7 der Sicherungsklemme weist eine angelenkte Abdeckkappe 13, nach Figuren 1 oder 2, auf, die über den ersten Anschluß 1 und einen Anschluß 3 für die Durchverbindung geklappt werden kann.

Die Sicherungsklemme nach den Figuren 1 und 2 weist ein Klemmengehäuse 7 auf, das eine seitlich offene Tasche 14 für eine senkrecht zur Zeichenebene sich erstreckende Tragschiene bildet, auf die die Sicherungsklemme aufgerastet werden kann. Es ist herstellungstechnisch günstig, wenn das Klemmengehäuse 7 einen Einsatz 15 aus Isolierstoff aufnimmt, der Kammern für Steckanschlüsse, die oberen Anschlüsse - zweiter Anschluß 2 und oberer Anschluß 3 für die Durchverbindung - und für den Verbindungskörper 9 und Kanäle für bandförmige Verbindungen bildet. Ein derartiges Klemmengehäuse kann mit einfachem Werkzeug ohne Seitenschieber gefertigt werden. Das Klemmengehäuse 7 kann in bei Reihenklemmen üblicher Weise Aufnahmen 16 für Bezeichnungsschilder bilden.

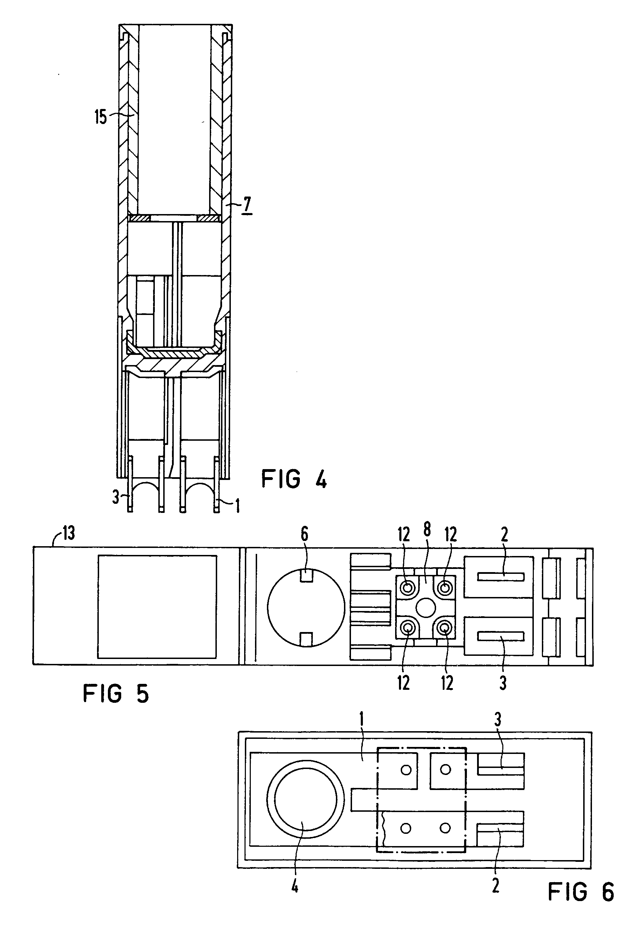

Die leitenden Verbindungen sind bandförmig und so abgewinkelt, daß sie in der Kammer 8 für den Verbindungskörper 9 nebeneinander leigen, wie es unter anderem in den Figure 1, 2, 6 und 8 veranschaulicht ist.

Der Verbindungskörper 9 nach Fig. 7 nimmt einen Signalgeber 10 an seiner Stirnseite auf. Von hier kann andererseits anstelle eines Signalgebers auch eine Kappe mit Durchführung für einen Leitungsanschluß zu einem externen Signalgeber angeordnet sein. Um zu einem Signalgeber, sei es eine Leuchtdiode, eine Glimmlampe oder eine Glühlampe, spannungsmäßig den Einsatzbereich zu vergrößern, ist es vorteilhaft, einen Kaltleiterwiderstand zum Signalgeber in Reihe zu schalten.

Der Verbindungkörper 9 ist im Ausführungsbeispiel nach Fig. 7 im wesentlichen quaderförmig, wobei Steckkontakte 11 längs einer Seite angeordnet sind. Seitlich angeordnete Noppen 16 können mit entsprechenden Ausnehmungen 17 in nachgiebigen Seitenwänden der Kammer 8 verrasten. Wenn man den Verbindungkörper 9 um seine gedachte Achse in Steckrichtung umsetzt, können verschiedene Schaltverbindungen zu den im Ausführungsbeispiel nach Fig. 8 bandförmigen Verbundungen hergestellt werden.

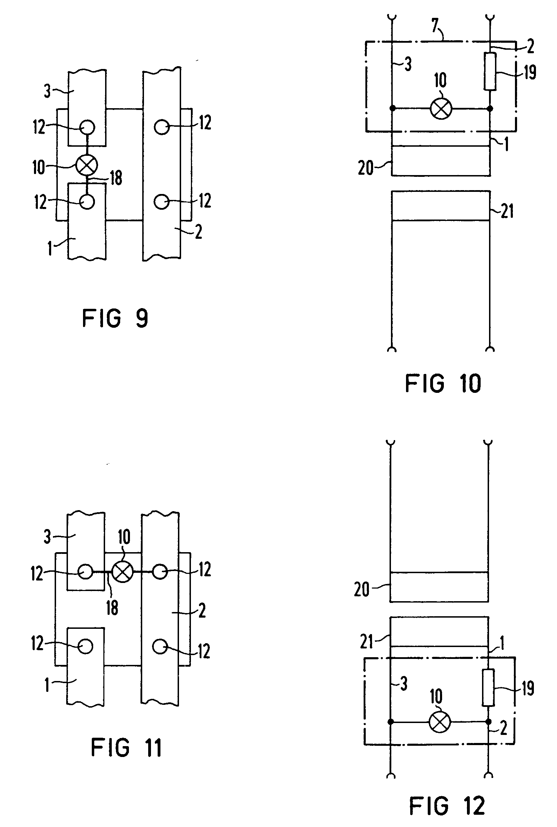

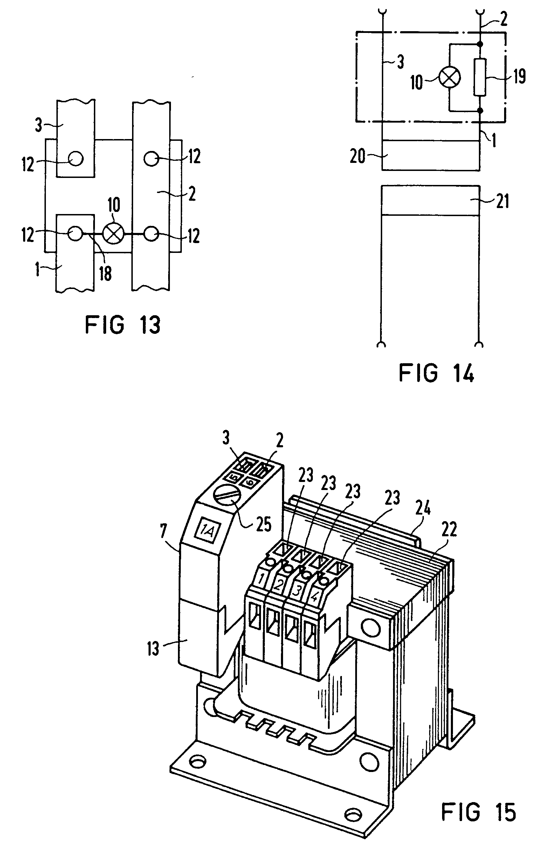

In Fig. 9 sind die in einer Ebene nebeneinander zusammengeführten Verbindungen mit den Bezugszeichen 1, 2 und 3 als Symbole für die Anschlüsse 1, 2 und 3 veranschaulicht. Durch den Verbindungskörper kann eine Konaktverbindung 18 über den Signalgeber 10 hergestellt werden. Aus der zugeordneten Schaltverbindung nach Fig. 10 sieht man, daß die Sicherungsklemme mit dem Sicherungseinsatz 19 in der Zuleitung zur Primärwicklung 20 eines Transformators angeordnet ist. Der Signalgeber gibt solange Signal, leuchtet beispielsweise auf, wie der Sicherungseinsatz 19 intakt ist. Eine entsprechende Beschaltung für eine Sicherungsklemme auf der Sekundärseite, also im Abgang der Sekundärwicklung 20 ist in Fig. 12 wiedergegeben. Die Sicherungsklemme ist also zwischen der Sekundärwicklung 21 und einem Verbraucher eingeschaltet. Für eine Sicherungsklemme auf der Primärseite und für eine Beschaltung, bei der der Signalgeber 10 erst ein Signal gibt, wenn der Sicherungseinsatz 19 angesprochen hat, also defekt ist,wird in Fig. 14 veranschaulicht. Die Primärwicklung des Transformators ist wieder mit 20 und die Sekundärwicklung mit 21 bezeichnet. Der zugeordnete Einsatz des Verbindungskörpers ist in Fig. 13 dargestellt.

In Fig. 15 ist veranschaulicht, wie die Sicherungsklemme im Gehäuse 7 an einem Kleintransformator 22 zusammen mit anderen Anschlußklemmen 23 an einer angespritzten Tragschiene 24 eingesteckt ist. Ein Sicherungseinsatz ist unter der Verschlußkappe 25 angeordnet.

**Patentansprüche**

1. Sicherungsklemme, insbesondere zum Aufsetzen auf Tragschienen, besonders an Kleintransformatoren, die zwischen Zugangs- (1) und Abgangsanschlüssen (2) elektrisch leitende Verbindungen aufweist, wobei in eine Verbindung eine Sicherung (19) zwischen einem Fußkontakt (4) und einem Kopfkontakt (6) eingeschaltet ist, wobei die leitenden Verbindungen zum Fußkontakt und zum Kopfkontakt der Sicherung (19) in einer Gehäusekammer zusammengeführt und mit einem Signalgeber (10) verbindbar sind, **dadurch gekennzeichnet,** daß die leitenden Verbindungen zum Fußkontakt (4) und zum Kopfkontakt (6) der Sicherung zusätzlich mit einer Durchverbindung in einer Gehäusekammer (8) zusammengeführt sind und daß von den genannten drei elektrischen Verbindungen wahlweise jeweils zwei mittels eines umsetzbaren Verbindungskörpers (9) mit dem Signalgeber (10) verbindbar sind.

2. Sicherungklemme nach Anspruch 1, wobei das Klemmengehäuse (7) eine seitlich offene Tasche (14) für eine Tragschiene bildet und eine angelenkte Abdeckkappe(13) über Anschlüssen an der unteren Schmalseite des Klemmengehäuse aufweist, Kammern für Steckanschlüsse an der oberen Schmalseite des Klemmengehäuses bildet und in einer anderen Kammer (5) eine Sicherungseinsatz (19) zwischen Kopf-(6) und Fußkontakt (4) aufnimmt, **dadurch gekennzeichnet**, daß in einer weiteren Kammer (8) ein Verbindungskörper (9) einsteckbar ist, der durch Umsetzen um seine gedachte Steckachse mit den Verbindungen (zu Anschlüssen 1, 2, 3) verschiedenartige Steckverbindungen herstellt.

3. Sicherungsklemme nach Anspruch 2, **dadurch gekennzeichnet**, daß die leitenden Verbindungen bandförmig und so abgewinkelt sind, daß sie in der Kammer (8) für den Verbindungskörper (9) nebeneinanderliegen.

4. Sicherungsklemme nach Anspruch 2, **dadurch gekennzeichnet**, daß das Klemmengehäuse (7) einen Einsatz (15) aus Isolierstoff aufnimmt, der Kammern für Steckanschlüsse und für den Verbindungskörper und Kanäle für bandförmige Verbindungen bildet.

5. Sicherungsklemme nach Anspruch 2, **dadurch gekennzeichnet**, daß der Verbindungskörper (9) einen Signalgeber (10) aufnimmt.

6. Sicherungsklemme nach Anspruch 2, **dadurch gekennzeichnet**, daß der Verbindungskörper (9) einen Leitungsanschluß zu einem externen Signalgeber aufweist.

7. Sicherungsklemme nach Anspruch 2, **dadurch gekennzeichnet**, daß der Signalgeber im wesentlichen eine Leuchtdiode ist.

8. Sicherungsklemme nach Anspruch 2, **dadurch gekennzeichnet**, daß der Signalgeber (10) im wesentlichen eine Glimmlampe ist.

9. Sicherungsklemme nach Anspruch 2, **dadurch gekennzeichnet**, daß der Signalgeber (10) im wesentlichen eine Glühlampe ist.

10. Sicherungsklemme nach Anspruch 2, **dadurch gekennzeichnet**, daß zum Signalgeber (10) ein Kaltleiterwiderstand in Reihe geschaltet ist, um den Einsatzbereich des Signalgebers zu vergrößern.

**Claims**

1. A fuse terminal, in particular for placing on mounting rails, in particular on miniature transformers, which have electrically conductive connections between the input terminals (1) and the output terminals (2), wherein a fuse (19) is inserted in a connection between a base contact (4) and a top contact (6), wherein the conductive connections to the base contact and to the top contact of the fuse (19) are joined together in a housing chamber and are able to be connected to a signal transmitter (10),
characterised in that the conductive connections to the base contact (4) and to the top contact (6) of the fuse are able to be joined in addition to a through-connection in a housing chamber (8), and in that two of the three named electrical connections can in each case be connected selectively to the signal transmitter (10) by means of a reversible connecting body (9).

2. A fuse terminal according to claim 1, wherein the terminal housing (7) forms a pocket (14) open on the side for a mounting rail and has a hinged cover cap (13) above terminals on the lower narrow side of the terminal housing, forms chambers for plug-type terminals on the upper narrow side of the terminal housing and in another chamber (5) accommodates a fuse link (19) between the top contact (6) and the base contact (4),
characterised in that a connecting body (9) is able to be inserted into a further chamber (8), which body, by re-positioning to the extent of its notional plug axis, produces with the connections (to terminals 1,2,3) various plug connections.

3. A fuse terminal according to claim 2, characterised in that the conductive connections are band-shaped and bent around so that they lie next to each other in the chamber (8) for the connecting body (9).

4. A fuse terminal according to claim 2, characterised in that the terminal housing (7) accommodates a (fuse) link (15) of insulating material, which forms chambers for plug-type terminals and for the connecting body and forms ducts for the band-shaped connections.

5. A fuse terminal according to claim 2, characterised in that the connecting body (9) accommodates a signal transmitter (10).

6. A fuse terminal according to claim 2, characterised in that the connecting body (9) has a line terminal to an external signal transmitter.

7. A fuse terminal according to claim 2,

characterised in that the signal transmitter is essentially a light-emitting diode.

8. A fuse terminal according to claim 2, characterised in that the signal transmitter (10) is essentially a glow lamp.

9. A fuse terminal according to claim 2, characterised in that the signal transmitter (10) is essentially an incandescent lamp.

10. A fuse terminal according to claim 2, characterised in that a thermistor resistor is connected in series to the signal transmitter (10), in order to enlarge the range of use of the signal transmitter.

**Revendications**

1. Borne à fusible, destinée notamment à être montée sur des rails de support, en particulier dans de petits transformateurs, qui comporte des liaisons électriquement conductrice entre une borne d'arrivée (1) et une borne de départ (2), et dans laquelle un fusible (19) est inséré entre un contact de base (4) et un contact de tête (6), et les liaisons conductrices aboutissant au contact de base et au contact de tête du fusible (19) sont réunies dans la chambre d'un boîtier et peuvent être raccordées à un générateur de signaux (10), caractérisée par le fait que les liaisons conductrices aboutissant au contact de base (4) et au contact de tête (6) du fusible sont réunies en outre au moyen d'une interconnexion dans une chambre (8) du boîtier et que respectivement deux des trois liaisons électriques indiquées peuvent être réunies, au choix, au générateur de signaux (10), au moyen d'un corps de liaison (9) pouvant être déplacé.

2. Borne à fusible suivant la revendication 1, dans lequel le boîtier à bornes (7) forme un logement ouvert latéralement (14) pour un rail de support et comporte un capot de revêtement articulé (13) situé au-dessus de bornes présentes sur le petit côté inférieur du boîtier à bornes, forme des chambres pour les bornes à enfichage sur le petit côté supérieur du boîtier à bornes et loge, dans une autre chambre (5), une cartouche fusible (19) entre le contact de tête (6) et le contact de base (4), caractérisée par le fait que dans une autre chambre (8) peut être enfiché un corps de liaison (9) qui, par pivotement autour de son axe d'enfichage imaginaire, établit des liaisons à enfichage de différents types, avec les liaisons (aboutissant aux bornes 1, 2, 3).

3. Borne à fusible suivant la revendication 2, caractérisée par le fait que les liaisons conductrices sont réalisées en forme de bande et sont coudées de sorte qu'elles sont juxtaposées dans la chambre (8) servant à loger le corps de liaison (9).

4. Borne à fusible suivant la revendication 2, caractérisée par le fait que le boîtier à bornes (7) loge un insert (15) en un matériau isolant, qui forme des chambres pour des bornes à enfichage et pour le corps de liaison et des canaux pour des liaisons en forme de bandes.

5. Borne à fusible suivant la revendication 2, caractérisée par le fait que le corps de liaison (9) loge un générateur de signaux (10).

6. Borne à fusible suivant la revendication 2, caractérisée par le fait que le corps de liaison (9) possède une borne de conducteur pour le raccordement d'un générateur externe de signaux.

7. Borne à fusible suivant la revendication 2, caractérisée par le fait que le générateur de signaux est essentiellement une diode à luminescence.

8. Borne à fusible suivant la revendication 2, caractérisée par le fait que le générateur de signaux (10) est essentiellement une lampe à effluves.

9. Borne à fusible suivant la revendication 2, caractérisée par le fait que le générateur de signaux (10) est essentiellement une lampe à incandescence.

10. Borne à fusible suivant la revendication 2, caractérisée par le fait qu'en série avec le générateur de signaux (10) est branchée une résistance formant conducteur à froid, qui sert à accroître la plage d'utilisation du générateur de signaux.

FIG 1

FIG 2

FIG 3

EP 0 286 946 B1

FIG 4

15

7

3 1

FIG 5

13 6 12 8 12 2

12 12 3

FIG 6

1 3

4 2

9

FIG 7

FIG 8

FIG 9

FIG 10

FIG 11

FIG 12

FIG 13

FIG 14

FIG 15